# EUROPEAN PATENT APPLICATION

(11) **EP 4 568 138 A1**
(43) Date of publication of application: **11.06.2025**
(21) Application number: 22956703.7
(22) Date of filing: 27.08.2022
(51) Int. Cl.: H04B 10/00

(54) **DATA REORDERING TRAINING METHOD AND DIE**

(71) Applicant: Huawei Technologies Co., Ltd., Shenzhen, Guangdong 518129 (CN)
(72) Inventor: CAO, Wei, Shenzhen, Guangdong 518129 (CN); FENG, Jun, Shenzhen, Guangdong 518129 (CN); YIN, Haifeng, Shenzhen, Guangdong 518129 (CN); XIAO, Hu, Shenzhen, Guangdong 518129 (CN)
(74) Representative: Isarpatent
(86) International application number: PCT/CN2022/115329
(87) International publication number: WO 2024/044867

(57) **Abstract**

Embodiments of this application provide a data re-order training method and a die, and relate to the field of chip technologies, to implement data order-preserving receiving by sending serial training data and selecting a clock phase, improve transmission efficiency of serial service data in a serial interface between dies, and reduce hardware overheads. A specific solution is as follows: A first die receives serial training data sent by a second die, where a least significant bit of the serial training data is a first level, another significant bit of the serial training data is a second level, and the first level and the second level are different levels; and the first die selects a first clock phase, and when a least significant bit of parallel training data obtained through deserialization is the first level, determines to use the first clock phase to deserialize serial service data sent by the second die. Embodiments of this application are applied to a training process before the serial service data is transmitted between the dies in order.

## Description

### TECHNICAL FIELD

Embodiments of this application relate to the field of chip technologies, and in particular, to a data re-order training method and a related die.

### BACKGROUND

A high-speed serial interface includes a transmit (Transmit, TX) end and a receive (Receive, RX) end. The TX end encodes data that needs to be sent. For example, in a peripheral component interconnect express (peripheral component interconnect express, PCIE) standard, 8-bit data is encoded into 10-bit data through 8b/10b encoding at a low rate, and 128-bit data is encoded into 130-bit data through 128b/130b encoding at a high rate. To determine a start location of encoded data, the RX end needs to determine a location of a control character in the encoded data.

Generally, during 8b/10b encoding, a comma (Comma) character is used as a control character, and during 128b/130b encoding, a synchronization header (Sync Header) character is used as a control character. In addition, the RX end needs to complete symbol lock (Symbol Lock) and block alignment (Block Alignment) procedures in a training phase. Consequently, a current data transmission mode of a high-speed serial interface needs to rely on a special control character, which leads to low data transmission efficiency and increases a hardware area and hardware power consumption. In addition, searching for a location of the control character may increase latency (Latency) of data transmission.

### SUMMARY

Embodiments of this application provide a data re-order training method and a die, to implement data order-preserving receiving by sending training data and selecting a clock phase, improve data transmission efficiency in a serial interface, and reduce hardware overheads.

To achieve the foregoing objective, the following technical solutions are used in embodiments of this application.

According to a first aspect, an embodiment of this application provides a data re-order training method, applied to a chip system, where the chip system includes a first die and a second die, the first die and the second die transmit data through a serial interface, and the method includes: The first die receives serial training data sent by the second die, where a least significant bit of the serial training data is a first level, another significant bit of the serial training data is a second level, and the first level and the second level are different levels; and the first die selects a first clock phase, and when a least significant bit of parallel training data obtained through deserialization is the first level, determines to use the first clock phase to deserialize serial service data sent by the second die.

The data re-order training method provided in embodiments of this application is applied to an order-preserving calibration process before the first die and the second die transmit the serial service data. The first die receives the serial training data sent by the second die, to select a clock phase based on the serial training data, so as to implement order-preserving receiving of the serial service data. The serial training data is special encoded data. For example, the least significant bit is a high level, and the another significant bit is a low level; or the least significant bit is a low level, and the another significant bit is a high level. The clock phase may be understood as a serial-to-parallel conversion clock phase, and is used by a deserialization circuit to deserialize the serial training data based on the clock phase, to obtain the parallel training data.

The first die may select the first clock phase from a plurality of clock phases through traversal, and determine whether the least significant bit of the parallel training data obtained through deserialization in the currently selected clock phase is the first level. If the least significant bit of the parallel training data obtained by the first die through deserialization is the first level when the first clock phase is selected, it may be considered that the parallel training data obtained by deserializing the serial training data by the first die is the same as the training data sent by the second die. In this way, it is equivalent to that a data header of the serial service data sent by the second die is determined by selecting the clock phase. After the first clock phase is determined, the first die may start to use the first clock phase to receive the serial service data sent by the second die and deserialize the serial service data, so as to implement order-preserving receiving of the serial service data. In this application, there is no need to add a special control character to the serial service data, so that problems of long latency of a receive end, high hardware overheads of power consumption and area, and low transmission efficiency caused by adding the special control character can be avoided. In this application, once the clock phase that can implement data order-preserving receiving is determined before the serial service data starts to be received, a transmit end may directly send, to a receive end, data that does not carry a special control character. This can reduce latency of receiving data by the receive end, improve data transmission efficiency in the serial interface, and reduce hardware overheads of power consumption and area.

In a possible design, before the first die receives the serial training data sent by the second die, the method includes: The first die receives a training request sent by the second die, where the training request is used to request to send the serial training data.

In this design, before sending the serial training data, the second die first sends the training request, to request the first die to send the serial training data. After obtaining a reply that is sent by the first die and that indicates training is allowed, the second die starts a training process, to ensure that the first die can perform training in an idle state, so as to complete the training process. The training process is equivalent to training to obtain the clock phase that can implement order-preserving receiving of the serial service data.

In a possible design, the first level is a high level, and the second level is a low level.

In this design, special serial training data encoding is set, where the least significant bit is a high level, and the another significant bit is a low level. For example, 10-bit serial training data may be represented as 10'b00_0000_0001. It may be determined, by determining whether the least significant bit of the parallel training data obtained by deserializing the serial training data is a high level, whether training is completed, so that a computation amount of the training process is reduced and training efficiency is improved.

In a possible design, the first die includes a multi-clock generation circuit, a multiplexer, a deserialization circuit, a comparator circuit, and an accumulator circuit. A plurality of input ends of the multiplexer are coupled to a plurality of output ends of the multi-clock generation circuit, an output end of the multiplexer is coupled to an input end of the deserialization circuit, an output end of a least significant bit of parallel data of the deserialization circuit is coupled to a first input end of the comparator circuit, a third level is input at a second input end of the comparator circuit, an output end of the comparator circuit is coupled to an input end of the accumulator circuit, and an output end of the accumulator circuit is coupled to a control signal input end of the multiplexer.

In this design, the multi-clock generation circuit is configured to: generate a plurality of clock phases, and output the plurality of clock phases to the multiplexer. The multiplexer is configured to select a clock phase from the plurality of clock phases. The deserialization circuit deserializes the serial training data based on the clock phase selected by the multiplexer. The comparator circuit compares the output end of the least significant bit of the parallel data of the deserialization circuit with the second input end, and outputs a comparison result to the accumulator circuit. The clock phase may be traversed via the comparator circuit, the accumulator circuit, and the multiplexer, to determine the first clock phase. The first die may start to use the first clock phase to receive the serial service data sent by the second die and deserialize the serial service data, so as to implement data order-preserving receiving.

In a possible design, when the first level is a high level and the second level is a low level, the third level is a low level; or when the first level is a low level and the second level is a high level, the third level is a high level.

In this design, logic of the comparator circuit is to output a high level when the first input end and the second input end are a same level, and output a low level when the first input end and the second input end are different levels. In addition, the serial training data uses special encoding, and the least significant bit and the another significant bit are different levels. To implement clock phase traversal, the third level needs be set to a level different from the first level.

In a possible design, when the first level is a high level and the second level is a low level, that the first die selects a first clock phase, and when a least significant bit of parallel training data obtained through deserialization is the first level, determines to use the first clock phase to deserialize serial service data sent by the second die includes: The accumulator circuit sends a first control signal to the multiplexer, to control the multiplexer to select the first clock phase and output the first clock phase to the deserialization circuit; the comparator circuit compares the least significant bit of the parallel training data obtained through deserialization with a low level that is input at the second input end of the comparator circuit, and outputs a first comparison result; and when the first comparison result is a low level, the multiplexer selects to use the first clock phase to deserialize the serial service data sent by the second die.

In a possible design, when the first comparison result is a high level, the accumulator circuit sends a second control signal to the multiplexer, to control the multiplexer to select a second clock phase and output the second clock phase to the deserialization circuit; the comparator circuit compares the least significant bit of the parallel training data obtained through deserialization with the low level that is input at the second input end of the comparator circuit, and outputs a second comparison result; and when the second comparison result is a low level, the multiplexer selects to use the second clock phase to deserialize the serial service data sent by the second die.

In this design, all clock phases are traversed via the comparator circuit, the accumulator circuit, and the multiplexer, to determine the first clock phase. Due to a special encoding format of the serial training data, whether to select a current clock phase only needs to be determined by determining whether the least significant bit of the parallel training data obtained through deserialization is consistent with the least significant bit of the serial training data, so that a computation amount of the chip system is reduced. After the first clock phase is determined, the first die may start to use the first clock phase to receive the serial service data sent by the second die and deserialize the serial service data, so as to implement data order-preserving receiving.

In a possible design, the first die further includes a first sampling circuit and a second sampling circuit; the deserialization circuit includes a first deserialization circuit and a second deserialization circuit; an output end of the first sampling circuit is coupled to an input end of the first deserialization circuit, and an output end of the second sampling circuit is coupled to an input end of the second deserialization circuit; the first sampling circuit samples odd-bit data in the serial training data, and outputs the odd-bit data to the first deserialization circuit; and the second sampling circuit samples even-bit data in the serial training data, and outputs the even-bit data to the second deserialization circuit.

In this design, the odd-bit data and the even-bit data are separately sampled. Even if there are a plurality of consecutive "0"s or "1"s in the serial training data, the consecutive "0"s or "1"s are separated after sampling, so that direct current balance can be ensured.

According to a second aspect, an embodiment of this application provides a first die, where the first die is used in a chip system, the chip system includes the first die and a second die, and the first die and the second die transmit data through a serial interface. The first die includes: a receiver, configured to receive serial training data sent by the second die, where a least significant bit of the serial training data is a first level, another significant bit of the serial training data is a second level, and the first level and the second level are different levels; and a selection circuit, configured to: select a first clock phase, and when a least significant bit of parallel training data obtained through deserialization is the first level, determine to use the first clock phase to deserialize serial service data sent by the second die.

For beneficial effect of the second aspect, refer to the descriptions of the first aspect.

In a possible design, the receiver is further configured to receive a training request sent by the second die, where the training request is used to request to send serial training data.

In a possible design, the first level is a high level, and the second level is a low level.

In a possible design, the selection circuit includes a multiplexer, and the first die further includes a multi-clock generation circuit, a deserialization circuit, a comparator circuit, and an accumulator circuit. A plurality of input ends of the multiplexer are coupled to a plurality of output ends of the multi-clock generation circuit, an output end of the multiplexer is coupled to an input end of the deserialization circuit, an output end of a least significant bit of parallel data of the deserialization circuit is coupled to a first input end of the comparator circuit, a third level is input at a second input end of the comparator circuit, an output end of the comparator circuit is coupled to an input end of the accumulator circuit, and an output end of the accumulator circuit is coupled to a control signal input end of the multiplexer.

In a possible design, when the first level is a high level and the second level is a low level, the third level is a low level; or when the first level is a low level and the second level is a high level, the third level is a high level.

In a possible design, the first die further includes a controller, where an input end of the controller is coupled to the output end of the comparator circuit. When the first level is a high level and the second level is a low level, the accumulator circuit is configured to send a first control signal to the multiplexer. The multiplexer is configured to: select the first clock phase and output the first clock phase to the deserialization circuit. The comparator circuit is configured to: compare the least significant bit of the parallel training data obtained through deserialization with a low level that is input at the second input end of the comparator circuit, and output a first comparison result; and when the first comparison result is a low level, output the first comparison result to the controller. The controller is configured to indicate, to the second die, that training is completed. The multiplexer is configured to select to use the first clock phase to deserialize the serial service data sent by the second die.

In a possible design, when the first comparison result is a high level, the accumulator circuit is configured to send a second control signal to the multiplexer. The multiplexer is configured to: select a second clock phase, and output the second clock phase to the deserialization circuit. The comparator circuit is configured to: compare the least significant bit of the parallel training data obtained through deserialization with the low level that is input at the second input end of the comparator circuit, and output a second comparison result; and when the second comparison result is a low level, output the second comparison result to the controller. The controller is configured to indicate, to the second die, that training is completed. The multiplexer is configured to select to use the second clock phase to deserialize the serial service data sent by the second die.

In a possible design, the receiver further includes a sampling circuit, the sampling circuit includes a first sampling circuit and a second sampling circuit, and the deserialization circuit includes a first deserialization circuit and a second deserialization circuit. An output end of the first sampling circuit is coupled to an input end of the first deserialization circuit, and an output end of the second sampling circuit is coupled to an input end of the second deserialization circuit. The first sampling circuit is configured to: sample odd-bit data in the serial training data, and output the odd-bit data to the first deserialization circuit. The second sampling circuit is configured to: sample even-bit data in the serial training data, and output the even-bit data to the second deserialization circuit.

According to a third aspect, an embodiment of this application provides a data re-order training method, applied to a chip system, where the chip system includes a first die and a second die, and the first die may be the first die according to the first aspect and any one of the possible designs of the first aspect. The first die and the second die transmit data through a serial interface. The method includes: The second die sends serial training data to the first die, where a least significant bit of the serial training data is a first level, another significant bit of the serial training data is a second level, and the first level and the second level are different levels; and the first die selects a first clock phase, and when a least significant bit of parallel training data obtained through deserialization is the first level, determines to use the first clock phase to deserialize serial service data sent by the second die.

According to a fourth aspect, an embodiment of this application provides a chip system, where the chip system includes a first die and a second die, and the first die may be the first die according to the second aspect and any one of the possible designs of the second aspect. The first die and the second die transmit data through a serial interface. The second die is configured to send serial training data to the first die, where a least significant bit of the serial training data is a first level, another significant bit of the serial training data is a second level, and the first level and the second level are different levels; and the first die is configured to: select a first clock phase, and when a least significant bit of parallel training data obtained through deserialization is the first level, determine to use the first clock phase to deserialize serial service data sent by the second die.

It can be understood that any first die, chip system, or the like provided above may be applied to the corresponding method provided above. Therefore, for beneficial effects that can be achieved by the apparatus, the optical chip, or the like, reference may be made to beneficial effects in the corresponding method. Details are not described herein again.

These aspects or other aspects in this application are more concise and comprehensible in the following descriptions.

### BRIEF DESCRIPTION OF DRAWINGS

FIG. 1 is a diagram of a structure of searching for a start location based on a comma character according to an embodiment of this application;
FIG. 2 is a diagram of a structure of an execution device according to an embodiment of this application;
FIG. 3 is a diagram of a structure of a chiplet system according to an embodiment of this application;
FIG. 4 is a flowchart of a data re-order training method according to an embodiment of this application;
FIG. 5 is a diagram of a circuit structure of a first die according to an embodiment of this application;
FIG. 6 is a diagram of a circuit structure of a first die according to an embodiment of this application;
FIG. 7A and FIG. 7B are a schematic flowchart of a data re-order training method according to an embodiment of this application;
FIG. 8A and FIG. 8B are a diagram of a structure of another chip system according to an embodiment of this application;
FIG. 9 is a flowchart of a clock phase traversal method according to an embodiment of this application;
FIG. 10 is a diagram of a structure of searching for a start location based on a data re-order training method according to an embodiment of this application; and
FIG. 11 is an NRZ mode-based training procedure according to an embodiment of this application.

### DESCRIPTION OF EMBODIMENTS

For ease of understanding, some concepts related to embodiments of this application are described for reference by using examples. Details are as follows:
8b/10b encoding: The 8b/10b encoding mode can ensure direct current balance of signals, so that quantities of bits of data "0" and data "1" are basically the same. In the 8b/10b encoding mode, a quantity of consecutive "1"s or "0"s cannot exceed five. In other words, a "0" or "1" needs to be inserted after every five consecutive "1"s or "0"s to ensure direct current balance of signals. In the 8b/10b encoding mode, a group of continuous 8-bit data is divided into two groups of data: a group of 3-bit data and a group of 5-bit data. After being encoded, the two groups of data are respectively a group of 4-bit data and a group of 6-bit data, and then form a group of 10-bit data for transmission. On the contrary, decoding is to convert a group of 10-bit input data to obtain 8-bit data.

In 128b/130b encoding, a 2-bit synchronization header is added before a 128-bit significant bit. When the synchronization header is data "01", it indicates that the 128-bit significant bit is an ordered set. When the synchronization header is data "10", it indicates that the 128-bit significant bit is an unordered set. Compared with the 8b/10b encoding mode, the 128b/130b encoding mode can effectively improve bandwidth utilization.

A serializer/deserializer (Serializer and Deserializer, SerDes) is a component that compresses a large-bit-width parallel bus into a few (usually one) differential serial links. The links can be switched at a rate higher than that of a low-speed large-bit-width parallel bus. The serializer/deserializer is serialized on the large-bit-width parallel bus, which implements point-to-point transmission of a large amount of data within a system, between systems, or between systems located at two different places, and reduces power consumption and costs.

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of embodiments, unless otherwise specified, "a plurality of" means two or more.

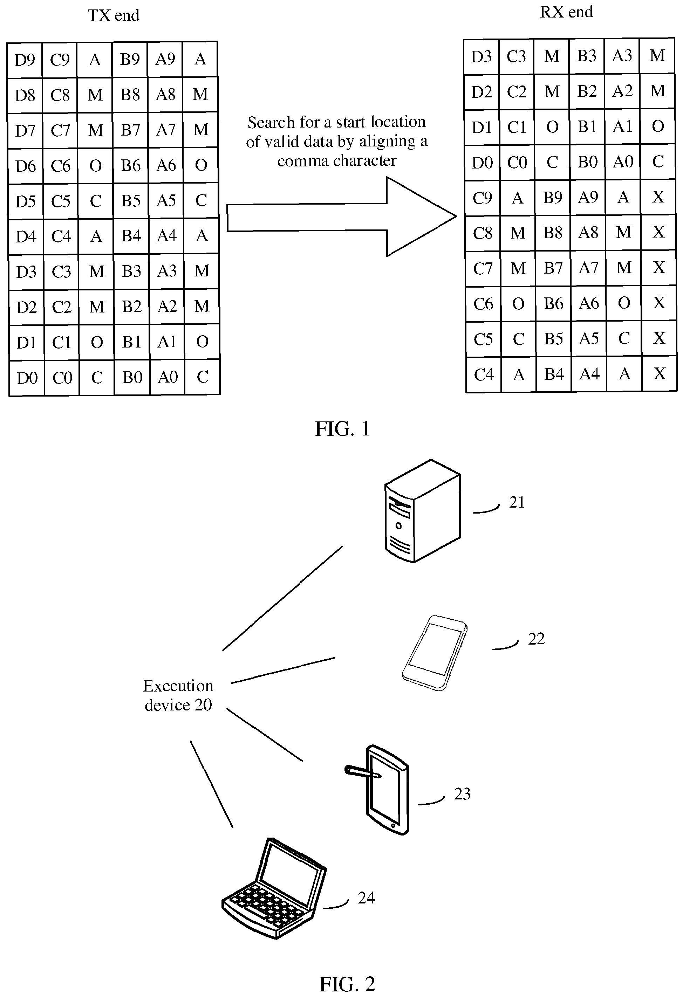

Currently, as shown in FIG. 1, FIG. 1 is a diagram of a structure of searching for a start location based on a comma character according to an embodiment of this application. Before data at a TX end is sent, 8-bit data is encoded into 10-bit data through 8b/10b encoding. For example, A0 to A9, B0 to B9, C0 to C9, and D0 to D9 are all groups of 10-bit data. A special comma character is further inserted in each group of 10-bit data, for example, a comma character is inserted between B0 to B9 and C0 to C9. The comma character is also a group of 10-bit data. The comma character is special and does not appear in normal 10-bit data. After receiving the data, an RX end searches for the comma character in a training process. Because the comma character is unique and special, a location of 10-bit data is determined after the comma character is found, that is, a start location of valid data is determined. For example, after the comma character is found, it may be determined that A0 to A9 are a group of 10-bit valid data, or it may be determined that C0 to C9 are a group of 10-bit valid data. However, when the RX end searches for the start location of the valid data, if a first bit of the comma character is not a first bit of a group of 10-bit data, when the start location of the valid data is searched for in a manner of aligning the comma character, a case in which another bit is found first may occur. For example, a first group of found data is X, X, X, X, X, X, C, O, M and M, where X is a part of data in a previous group of data, the group of data is not correct data, and does not include a complete comma character, and a mismatch occurs between the data. The RX end searches a plurality of times until the correct comma character is found. This increases latency of data transmission. For another form of found data, latency of data transmission is uncertain. In addition, in a manner of inserting the comma character into the valid data, transmission efficiency of the valid data is reduced. Therefore, adding the comma character to the data cannot be applied to a scenario in which latency is concerned, for example, a common scenario in which chips (Chiplets) are interconnected.

A chip system (Chiplet system) may be applied to different devices, for example, applied to an execution device 20 shown in FIG. 2. FIG. 2 is a diagram of a structure of an execution device according to an embodiment of this application. The execution device 20 may be a terminal, for example, a server 21, a mobile phone terminal 22, a tablet computer 23, a notebook computer 24, an augmented reality (Augmented Reality, AR) device (not shown in FIG. 2), a virtual reality (Virtual Reality, VR) device (not shown in FIG. 2), or an in-vehicle terminal (not shown in FIG. 2).

The chip system includes a plurality of dies (dies) that have specific functions and that can be modularized and assembled with each other. For example, the die may implement functions such as data storage, computation, signal processing, and data stream management. Based on a rich intellectual property core (intellectual property core, IP) reserve, the chiplet system proposes a concept of IP as a chiplet (IP as a Chiplet, IaaC), to realize plug-and-play of a special function IP with a die. For example, for some core processor IPs, the die may be a graphics processing unit (Graphics Processing Unit, GPU) IP, a neural-network processing unit (Neural-network Processing Unit, NPU) IP, a video processing unit (Video Processing Unit, VPU) IP, a digital signal processor (digital signal processor, DSP) IP, an image signal processor (Image Signal Processor, ISP) IP, or a display processor IP. In addition, the die may alternatively be a digital/analog hybridization IP, a radio frequency IP, and the like.

The chiplet system in this application may also be referred to as a chiplet system. In other words, the die may also be referred to as a chiplet.

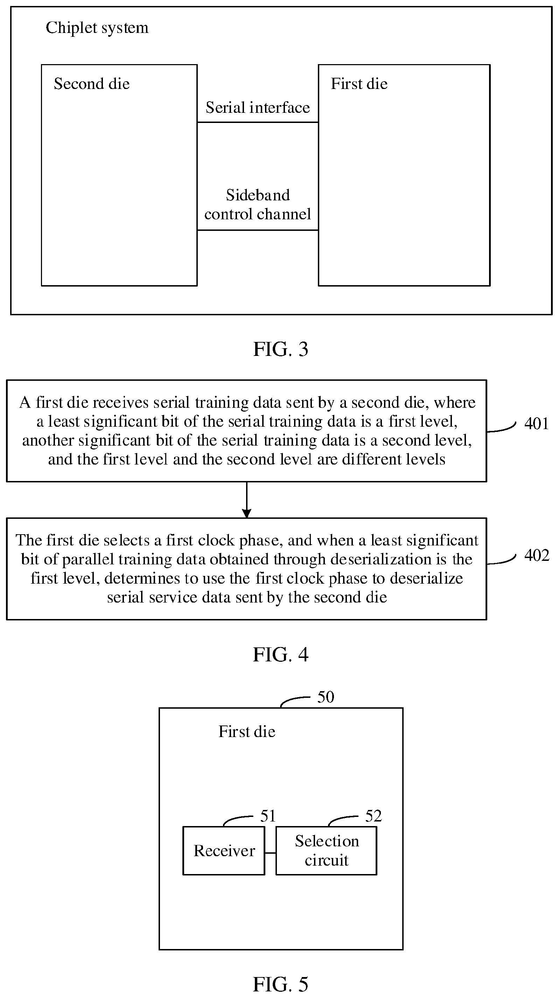

For example, the chiplet system may be applied to a system-on-a-chip (System-on-a-Chip, SoC), and dies with a plurality of functions are integrated on the SoC. For example, the chiplet system includes a first die and a second die shown in FIG. 3. FIG. 3 is a diagram of a structure of a chiplet system according to an embodiment of this application. Service data/application data may be transmitted between the first die and the second die through a serial interface. A control signal may also be transmitted between the first die and the second die through a sideband control channel.

For example, the first die is a primary processor chip. The primary processor chip may send service data to a secondary processor chip, where the second die is the secondary processor chip connected to the primary processor chip. For example, the second die is a memory chip.

By applying the foregoing chiplet system, for a problem of long latency caused by a current method for order-preserving receiving by determining a start location of data by relying on special encoding and a special control character between dies, an embodiment of this application provides a data re-order training method, and the method is applied to an order-preserving calibration process before serial service data is transmitted between a first die and a second die in a chiplet system.

Considering a problem in the conventional technology that data transmission efficiency is affected because special control characters such as a plurality of groups of comma characters are added to data, in this application, a first die receives serial training data sent by a second die, to select, based on the serial training data, a clock phase in which serial training data can be sequentially decoded. When the serial service data starts to be transmitted, order-preserving receiving of the serial service data may be implemented in the clock phase.

A process of selecting the clock phase based on the serial training data in this application is equivalent to a process in which the first die first completes clock phase alignment in a training phase, to determine a start location of encoded data. Data order-preserving in this application may be understood as that, on a basis that the start location of the encoded data can be accurately determined, a plurality of bits starting from the start location of the encoded data are valid data of the serial service data.

Specifically, in this application, before the first die starts to receive the serial service data, the first die may first select, based on the serial training data, a clock phase that can implement order-preserving receiving. If in the selected clock phase, a least significant bit of parallel training data obtained through deserialization is the same as a least significant bit of the serial training data, the least significant bit of the parallel training data obtained through deserialization is a start bit of the serial training data. In this way, in the current clock phase, if the first die receives the serial service data, the least significant bit of the parallel data obtained by deserializing the serial service data by the first die is the start location of the transmitted serial service data, and the first die may determine valid data starting from the start location of the serial service data.

According to the training method in this application, a receive end determines a data start location on a high-speed serial link without adding a special control character like a comma character, and latency of the receive end is short. The receive end herein may be understood as the first die in this application.

The following describes the data re-order training method in embodiments of this application.

FIG. 4 is a flowchart of a data re-order training method according to an embodiment of this application. The method includes the following procedure.

401: A first die receives serial training data sent by a second die, where a least significant bit of the serial training data is a first level, another significant bit of the serial training data is a second level, and the first level and the second level are different levels.

Correspondingly, the second die sends the serial training data to the first die. The serial training data uses special encoded data. For example, the least significant bit is a high level, and the another significant bit is a low level; or the least significant bit is a low level, and the another significant bit is a high level.

The clock phase may be understood as a serial-to-parallel conversion clock phase, and is used by a deserialization circuit to deserialize the serial training data based on the clock phase, to obtain parallel training data.

402: The first die selects a first clock phase, and when a least significant bit of the parallel training data obtained through deserialization is the first level, determines to use the first clock phase to deserialize serial service data sent by the second die.

The first die may select the first clock phase from a plurality of clock phases through traversal, and determine whether the least significant bit of the parallel training data obtained through deserialization in the currently selected clock phase is the first level. If the least significant bit of the parallel training data obtained by the first die through deserialization is the first level when the first clock phase is selected, it may be considered that the parallel training data obtained by deserializing the serial training data by the first die is the same as the serial training data sent by the second die, and the least significant bit of the parallel training data obtained through deserialization is a start location of the serial training data. In this way, it is equivalent to that the start location of the serial service data sent by the second die is determined by selecting the clock phase, so that order-preserving receiving of the serial service data can be implemented.

Therefore, in this application, there is no need to add a special control character to the serial service data, so that problems of long latency of a receive end, high hardware overheads of power consumption and area, and low transmission efficiency caused by adding the special control character can be avoided. In this application, once the clock phase that can implement data order-preserving receiving is determined before the serial service data starts to be received, a transmit end may directly send, to a receive end, serial service data that does not carry a special control character. This can reduce latency of receiving data by the receive end, improve data transmission efficiency in the serial interface, and reduce hardware overheads of power consumption and area.

Based on the foregoing descriptions, a single die is used as an example. The following describes a first die to which the data re-order training method is applied in embodiments of this application.

An embodiment of this application provides a first die. As shown in FIG. 5, FIG. 5 is a diagram of a circuit structure of the first die according to an embodiment of this application. The first die is applied to a chip system, the chip system includes a first die 50 and a second die, and the first die 50 and the second die transmit data through a serial interface. The first die 50 includes a receiver 51 and a selection circuit 52.

The receiver 51 is configured to receive serial training data sent by the second die, where a least significant bit of the serial training data is a first level, another significant bit of the serial training data is a second level, and the first level and the second level are different levels.

The selection circuit 52 is configured to: select a first clock phase, and when a least significant bit of parallel training data obtained through deserialization is the first level, determine to use the first clock phase to deserialize serial service data sent by the second die.

The receiver 51 may be considered as an RX (Receiver) end. The second die corresponding to the receiver 51 includes a transmitter, and the transmitter may be considered as a TX (Transmitter) end. The transmitter and the receiver 51 each include a serial interface, and the transmitter of the second die may send the serial training data or the serial service data to the receiver 51 of the first die 50.

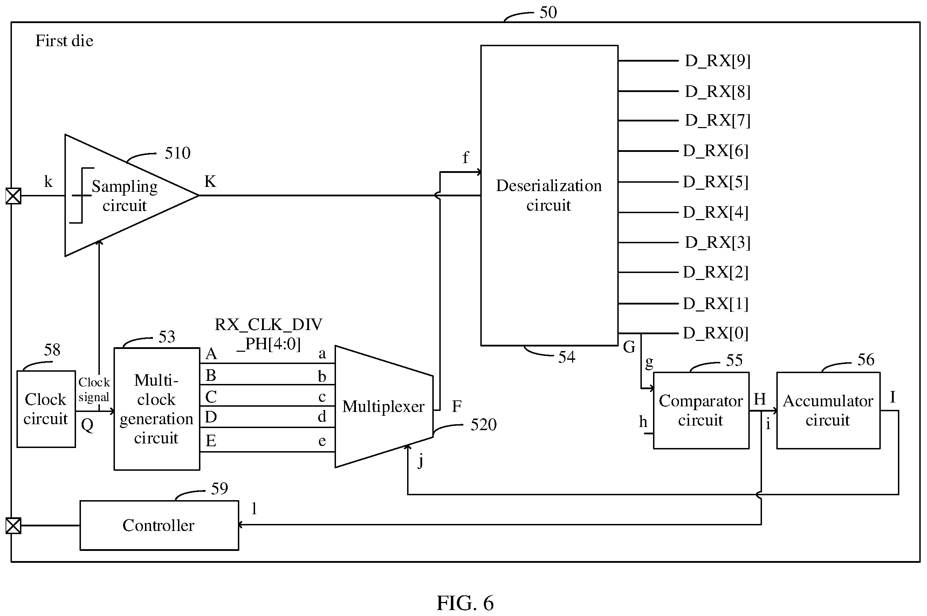

In some embodiments, based on the structure of the first die shown in FIG. 5, FIG. 6 is a diagram of a circuit structure of the first die 50. As shown in FIG. 6, in the first die 50, the receiver 51 includes a sampling circuit 510, and the selection circuit 52 may be a multiplexer 520. In addition, the first die 50 further includes a multi-clock generation circuit 53, a deserialization circuit 54, a comparator circuit 55, and an accumulator circuit 56.

An input end k of the sampling circuit 510 is coupled to the serial interface, and an output end K of the sampling circuit 510 is coupled to an input end f of the deserialization circuit 54. An input end Q of the multi-clock generation circuit 53 is also coupled to the input end k of the sampling circuit 510. A plurality of input ends (for example, input ends a, b, c, d, and e in FIG. 6) of the multiplexer 520 are coupled to a plurality of output ends (for example, output ends A, B, C, D, and E in FIG. 6) of the multi-clock generation circuit 53. An output end F of the multiplexer 520 is coupled to the input end f of the deserialization circuit 54, an output end G of a least significant bit of parallel data of the deserialization circuit 54 is coupled to a first input end g of the comparator circuit 55, a third level is input at a second input end h of the comparator circuit 55, an output end H of the comparator circuit 55 is coupled to an input end i of the accumulator circuit 56, and an output end I of the accumulator circuit 56 is coupled to a control signal input end j of the multiplexer 520.

The sampling circuit 510 is configured to sample, at a clock edge, the serial training data (an analog signal) received from the serial interface, and output a sampled digital signal to the deserialization circuit 54 for deserialization, to obtain the parallel training data.

The deserialization circuit 54 is configured to deserialize the serial training data into the parallel training data based on a clock signal.

The multi-clock generation circuit 53 may also be referred to as a frequency division and multi-phase clock generation circuit, and is configured to divide a frequency of an input clock signal and generate a multi-phase low-frequency output clock signal.

The multiplexer 520 is configured to select one output from a plurality of inputs based on the control signal. For example, in this application, the multiplexer 520 is configured to select one clock phase from a plurality of clock phases generated by the multi-clock generation circuit 53 and output the clock phase to the deserialization circuit 54, so that the deserialization circuit 54 deserializes the serial training data in the clock phase.

The comparator circuit 55 is configured to compare the least significant bit of the parallel training data obtained by the deserialization circuit 54 with the third level, and output a comparison result to the accumulator circuit 56.

The accumulator circuit 56 is configured to perform accumulation based on inputs, and output an accumulated result to the multiplexer 520.

With reference to FIG. 6, the first die further includes a clock circuit 58 and a controller 59. The clock circuit 58 is configured to output a clock signal to the multi-clock generation circuit 53 and the sampling circuit 510. The controller 59 is configured to: determine, based on the comparison result of the comparator circuit 55, whether training is completed, and when determining that the training is completed, indicate the second die to start to send the serial service data. An input end 1 of the controller 59 is coupled to the output end H of the comparator circuit 55.

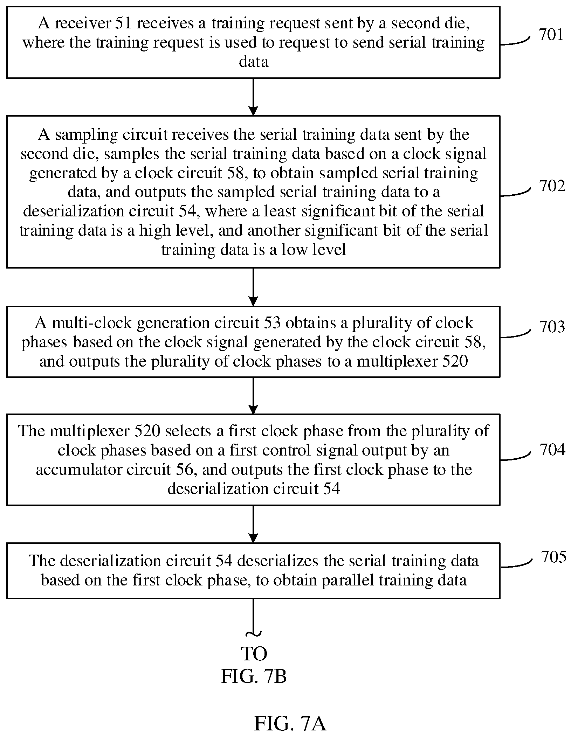

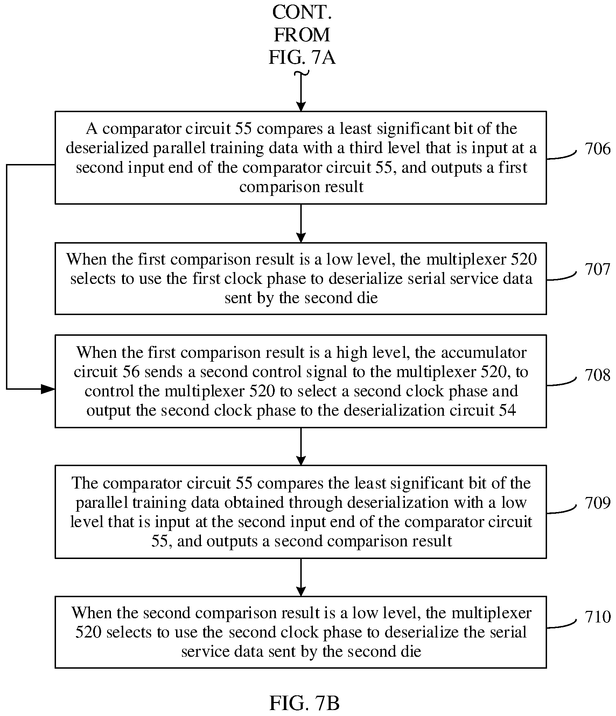

With reference to the circuit structure of the first die shown in FIG. 6, the following describes a data re-order training method provided in an embodiment of this application. FIG. 7A and FIG. 7B are a schematic flowchart of a data re-order training method according to an embodiment of this application. The method includes the following procedure.

701: The receiver 51 receives a training request sent by the second die, where the training request is used to request to send serial training data.

For example, the controller 59 receives, based on a sideband control signal, the training request sent by the second die.

A sideband is a frequency band generated by a modulated signal on upper and lower sides of a center carrier frequency. The sideband control signal is a control signal transmitted on the sideband, for example, the training request in this application. The sideband control signal may be transmitted through a sideband control channel between the first die and the second die. After the second die obtains a reply that is sent by the first die and that indicates training is allowed, the second die may send the serial training data to the first die through the serial interface, to start a training process.

702: The sampling circuit 510 receives the serial training data sent by the second die, samples the serial training data based on the clock signal generated by the clock circuit 58, to obtain sampled serial training data, and outputs the sampled serial training data to the deserialization circuit 54. The least significant bit of the serial training data is a high level, and another significant bit of the serial training data is a low level.

In other words, the first level is a high level, and the second level is a low level.

For example, for 10-bit serial training data, a least significant bit of the serial training data is 1, another significant bits of the serial training data is 0, and the serial training data may be represented as 10'b00_0000_0001. In this way, special serial training data encoding is set, where the least significant bit is a high level, and the another significant bit is a low level. It may be determined, by determining whether the least significant bit of the parallel training data obtained by deserializing the serial training data is a high level, whether training is completed, so that a computation amount of the training process is reduced and training efficiency is improved.

The sampling circuit 510 may include an analog signal input, a control signal input, and a digital signal output. When the input end k of the sampling circuit 510 is coupled to the serial interface, serial training data transmitted through the serial interface is used as the analog signal input of the sampling circuit. The input end k of the sampling circuit is further coupled to an output end (for example, the output end Q in FIG. 6) of the clock circuit 58, and a clock signal generated by the clock circuit 58 is used as the control signal input of the sampling circuit 510. The sampling circuit 510 samples the serial training data on a clock edge of the clock signal, to obtain the serial training data in a digital signal form.

The serial interface may be used to transmit the serial training data. For example, the serial interface is used as a data channel (Channel) to transmit the serial service data or the serial training data in this application. In an example, the serial interface may be, for example, PCIe, or may be a serial integrated device circuit (Serial Advanced Technology Attachment, SATA), a non-volatile memory system (Non-Volatile Memory express, NVME), or a mini-serial attached small computer system interface (mini Serial Attached Small Computer System Interface, mini SAS). A data channel type of the serial interface is not specifically limited herein.

For example, the second die modulates a to-be-sent digital signal into an analog signal, and transmits the analog signal through the serial interface. For example, the analog signal is the serial training data. The first die may perform sampling and deserialization on the analog signal received through the serial interface, to obtain a digital signal. For example, the digital signal is the serial training data. A modulation manner of the second die may be non-return-to-zero (Non-Return to Zero, NRZ) code, where a high level is used to represent logic "1", and a low level is used to represent logic "0". The modulation manner may be, for example, pulse amplitude modulation (Pulse Amplitude Modulation, PAM), where PAM is a modulation manner in which an amplitude of a pulse carrier changes with a baseband signal.

It should be noted that selection of the serial training data is related to the serial service data sent by the second die, and a bit width of the serial training data is the same as a bit width of the serial service data sent by the second die. For example, if the serial service data sent by the second die is 15-bit data, the serial training data may be represented as 15' b111_1111_1111_1110.

703: The multi-clock generation circuit 53 obtains a plurality of clock phases based on the clock signal generated by the clock circuit 58, and outputs the plurality of clock phases to the multiplexer 520.

For example, the multi-clock generation circuit 53 is configured to divide a frequency of the clock signal, and the multi-clock generation circuit 53 is further configured to generate the plurality of clock phases. Both a frequency division coefficient and a quantity of clock phases of the multi-clock generation circuit 53 are related to a bit width of the parallel training data. For N-bit parallel training data, N is an even number, and the first die 50 is implemented by using a half rate. In this case, the multi-clock generation circuit 53 divides a clock signal by N/2, and generates N/2 phases RX_CLK_DIV_PH[N/2-1:0] after frequency division. In an example, as shown in FIG. 6, for 10-bit parallel training data, a frequency of a clock signal is 100 MHz. The multi-clock generation circuit divides the clock signal by 5, and then the frequency of the clock signal is 20 MHz, and five clock phases RX_CLK_DIV_PH[4:0] obtained through frequency division are generated, which are respectively RX_CLK_DIV_PH[0], RX_CLK_DIV_PH[1], RX_CLK_DIV_PH[2], RX_CLK_DIV_PH[3], and RX_CLK_DIV_PH[4].

704: The multiplexer 520 selects a first clock phase from the plurality of clock phases based on a first control signal output by the accumulator circuit 56, and outputs the first clock phase to the deserialization circuit 54.

In other words, the accumulator circuit 56 sends the first control signal to the multiplexer 520, to control the multiplexer 520 to select the first clock phase.

For example, the multiplexer 520 is configured to select a clock phase from the plurality of clock phases, and the multiplexer 520 includes the plurality of input ends a, b, c, d, and e and the output end F. Generally, the multiplexer 520 selects a data input in a binary form, and an output of the output end F of the multiplexer 520 is the same as a value of the selected data input. For example, if the multiplexer 520 includes five input ends, bit indication values of the five input ends are respectively represented as 3'b000, 3'b001, 3'b010, 3'b011, and 3'b100. If the multiplexer 520 selects a first input end a, it is equivalent to that a port whose bit indication value is 3'b000 is selected, and it is equivalent to that the clock phase RX_CLK_DIV _PH[0] is selected. For example, in this embodiment of this application, the multi-clock generation circuit 53 generates the plurality of clock phases, and the multiplexer 520 selects the first clock phase from the plurality of clock phases as the clock signal of the deserialization circuit 54.

The accumulator circuit 56 is configured to accumulate a comparison result of the comparator circuit 55, and control a selection result of the multiplexer 520. In other words, the comparator circuit 55, the accumulator circuit 56, and the multiplexer 520 may implement clock phase traversal. When an output result of the accumulator circuit 56 is represented as PH_SEL[2:0], that is, the accumulator circuit 56 represents the accumulation result by using 3-bit data. The output result of the accumulator circuit 56 corresponds to an output value of the multiplexer 520, that is, PH_SEL[i]=RX_CLK_DIV_PH[i], where i is an integer.

It is assumed that before training starts, an initial value of the accumulator circuit 56 is configured as PH_SEL[2:0]=3'b000. In this case, the multiplexer 520 is controlled to select RX_CLK_DIV_PH[0] as the clock signal to deserialize the serial training data.

705: The deserialization circuit 54 deserializes the serial training data based on the first clock phase, to obtain the parallel training data.

For example, the deserialization circuit 54 deserializes, based on the clock phase selected by the multiplexer 520, the serial training data that is in a digital form and that is output by the sampling circuit 510, to obtain the parallel training data. For example, 10-bit serial training data may be deserialized to obtain D_RX[0], D_RX[1], ..., and D_RX[9]. The output end G of the least significant bit of the parallel data of the deserialization circuit 54 is coupled to the first input end g of the comparator circuit, that is, D_RX[0] of the deserialization circuit 54 is input to the first input end g of the comparator circuit 55.

706: The comparator circuit 55 compares the least significant bit of the parallel training data obtained through deserialization with the third level that is input at the second input end of the comparator circuit 55, and outputs a first comparison result. Then, step 707 or step 708 is performed. For example, setting of the third level is related to the first level.

This is because the logic of the comparator circuit 55 is to output a high level when the first input end g and the second input end h are a same level, and output a low level when the first input end g and the second input end h are different levels. In other words, the logic of the comparator circuit 55 is: the comparator circuit 55 compares the first input end g with the second input end h, and if the first input end g and the second input end h have a same level, the output end H of the comparator circuit 55 outputs a high level; or if the first input end g and the second input end h have different levels, the output end H of the comparator circuit 55 outputs a low level. When special encoding is used for the training data, the least significant bit and the another significant bit are different levels. To implement clock phase traversal, the third level needs to be set to a level different from the first level.

In other words, when the first level is a high level, the third level is a low level, or when the first level is a low level, the third level is a high level.

707: When the first comparison result is a low level, the multiplexer 520 selects to use the first clock phase to deserialize the serial training data sent by the second die. In other words, when the first level is a high level and the second level is a low level, the third level is a low level. If the first comparison result is a low level, the comparator outputs the first comparison result to the controller 59 through the output end H. The controller 59 is configured to indicate, to the second die, that the training is completed. In this case, the multiplexer 520 is configured to select to use the first clock phase to deserialize the serial training data sent by the second die.

In this way, special serial training data encoding is set, where the least significant bit is a high level, and the another significant bit is a low level. It may be determined, by determining whether the least significant bit of the parallel training data obtained through deserialization is a high level, whether training is completed, so that a computation amount of the training process is reduced and training efficiency is improved.

For example, before training starts, an initial value of the accumulator circuit 56 is configured as PH_SEL[2:0]=3'b000. If the first level is a high level and the second level is a low level, the serial training data may be 10'b00_0000_0001. After training starts, the first control signal is PH_SEL[0], and the first clock phase selected by the multiplexer 520 is RX_CLK_DIV_PH[0], and the RX_CLK_DIV_PH[0] is output to the deserialization circuit 54. The deserialization circuit 54 deserializes the serial training data based on the RX_CLK_DIV_PH[0], to obtain the parallel training data. The least significant bit of the parallel training data obtained through deserialization is input to the first input end of the comparator circuit 55, and is compared with a low level that is input at the second input end of the comparator circuit 55, and the first comparison result is output. If the first comparison result is a low level, the least significant bit of the parallel training data is a high level, and the another bit of the parallel training data is a low level. In this case, the parallel training data obtained through deserialization is the same as the serial training data. In this case, the accumulator circuit 56 does not perform accumulation, and it is equivalent to selecting RX_CLK_DIV_PH[0] as the first clock phase.

In this way, it is equivalent to that it is determined that the deserialization circuit 54 deserializes the serial training data based on the first clock phase. If the serial service data sent by the second die is continuously received based on the first clock phase, data order-preserving receiving can be implemented.

In another scenario, when the first level is a low level and the second level is a high level, 10-bit training data is used as an example. In this case, the least significant bit of the serial training data is 0, the another significant bit of the serial training data is 1, and the serial training data may be represented as 10'b11_1111_1110. The least significant bit of the parallel training data obtained by deserializing the serial training data is the first level. In other words, the least significant bit of the parallel training data is a low level, and the another significant bit of the parallel training data is a high level. In this case, the parallel training data obtained through deserialization may be represented as 10'b11_1111_1110. In other words, the parallel training data obtained by deserializing the serial training data by the first die is the same as the serial training data sent by the second die. In this way, it is equivalent to that a data header of the serial service data sent by the second die is determined by selecting the clock phase. The first die uses the first clock phase to receive the serial service data sent by the second die and deserialize the serial service data, so as to implement data order-preserving receiving.

In this way, compared with the conventional technology, in this application, when the clock phase that can implement order-preserving data receiving is determined by sending the serial training data and selecting the clock phase, a special control character does not need to be added to the serial service data, so that problems of long latency of a receive end, high hardware overheads of power consumption and area, and low transmission efficiency caused by adding the special control character can be avoided. In this application, once the clock phase that can implement data order-preserving receiving is determined before data starts to be received, the transmit end may directly send, to the receive end, the serial service data that does not carry a special control character. This can reduce latency of receiving data by the receive end, improve data transmission efficiency in the serial interface, and reduce hardware overheads of power consumption and area.

708: When the first comparison result is a high level, the accumulator circuit 56 sends a second control signal to the multiplexer 520, to control the multiplexer 520 to select a second clock phase and output the second clock phase to the deserialization circuit 54.

For example, when the first level is a high level and the second level is a low level, the third level is a low level. When the first comparison result is a high level, that is, the least significant bit of the parallel training data is a low level, the serial training data received by the first die 50 may be 10'bxx_xxxx_xxx0, where x is a low level or a high level. It can be learned that the deserialization circuit 54 does not obtain correct parallel training data by performing deserialization based on the first clock phase. In this case, the comparator circuit 55 outputs a high level, the accumulator circuit 56 performs accumulation based on the high level output by the comparator circuit 55, and the accumulator circuit 56 outputs the second control signal PH_SEL[1] to the controller 59.

709: The comparator circuit 55 compares the least significant bit of the parallel data obtained through deserialization with the low level that is input at the second input end of the comparator circuit 55, and outputs a second comparison result.

The second clock phase selected by the multiplexer 520 is RX_CLK_DIV_PH[1], and the RX_CLK_DIV_PH[1] is output to the deserialization circuit 54. The deserialization circuit 54 deserializes the serial training data based on the RX_CLK_DIV_PH[1], to obtain the parallel training data. The comparator circuit 55 obtains the second comparison result.

710: When the second comparison result is a low level, the multiplexer 520 selects to use the second clock phase to deserialize the serial training data sent by the second die. In other words, if the second comparison result is a low level, the least significant bit of the parallel training data is a high level, and the another bit of the parallel training data is low level. In this case, the parallel training data obtained through deserialization is the same as the serial training data. In this way, it is equivalent to that it is determined that deserialization circuit 54 deserializes the serial training data based on the second clock phase. If the serial service data sent by the second die is continuously received based on the second clock phase, data order-preserving receiving can be implemented.

In this case, when the second comparison result is a low level, the comparator circuit 55 outputs the second comparison result to the controller 59. The controller 59 is configured to indicate, to the second die, that the training is completed. The multiplexer 520 selects to use the second clock phase to deserialize the serial service data sent by the second die.

For example, if the second comparison result is a high level, the accumulator circuit 56 sends a third control signal PH_SEL[2] to the multiplexer 520, to control the multiplexer 520 to select a third clock phase RX_CLK_DIV_PH[2] and output RX_CLK_DIV_PH[2] to the deserialization circuit 54. The comparator circuit 55 is configured to compare the least significant bit of the parallel training data obtained through deserialization with the low level that is input at the second input end of the comparator circuit 55, and output a third comparison result. When the third comparison result is a low level, the third comparison result is output to the controller 59, and the controller 59 indicates, to the second die, that training is completed. The multiplexer selects the third clock phase to deserialize the serial service data sent by the second die.

Similarly, if the third comparison result is a high level, a fourth control signal is sent, and a fourth clock phase is selected until all clock phases are traversed, and the training process ends when a clock phase at which the comparator circuit outputs a low level is determined.

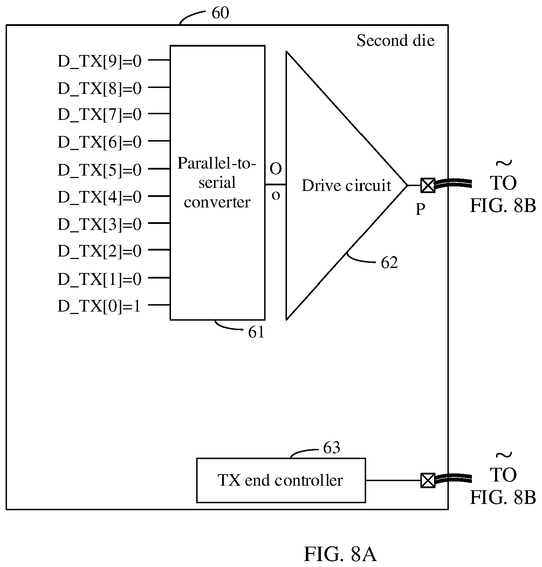

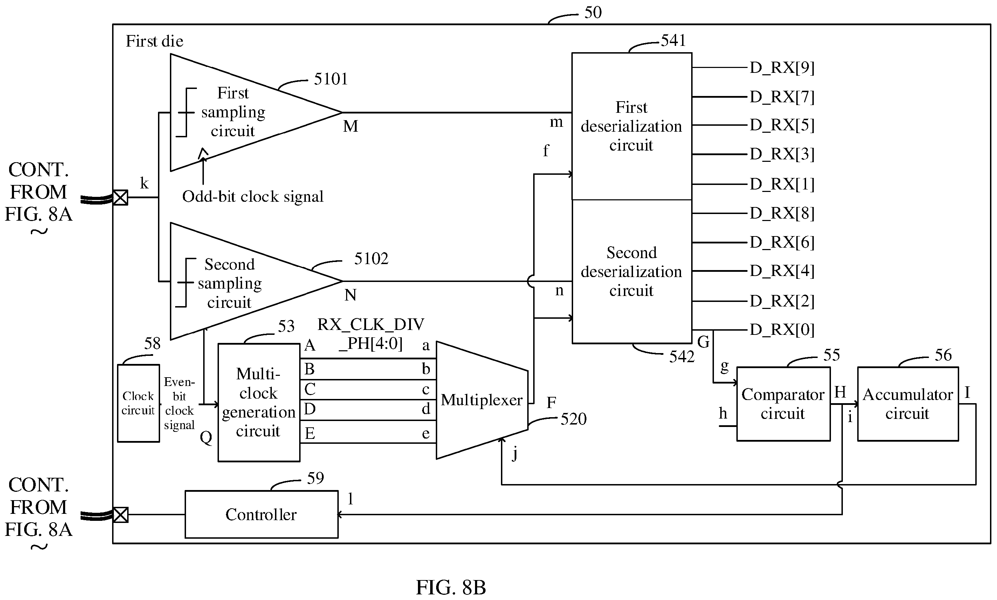

Optionally, as shown in FIG. 8A and FIG. 8B, FIG. 8A and FIG. 8B are a diagram of a structure of another chip system according to an embodiment of this application. The chip system includes a first die 50 and a second die 60. A sampling circuit 510 includes a first sampling circuit 5101 and a second sampling circuit 5102, and a deserialization circuit 54 includes a first deserialization circuit 541 and a second deserialization circuit 542. An output end M of the first sampling circuit 5101 is coupled to an input end m of the first deserialization circuit 541, and an output end N of the second sampling circuit 5102 is coupled to an input end n of the second deserialization circuit 542.

The first sampling circuit 5101 is configured to sample odd-bit data in serial training data, and output the odd-bit data to the first deserialization circuit 541. The second sampling circuit 5102 is configured to sample even-bit data in the serial training data, and output the even-bit data to the second deserialization circuit 542.

For example, the first sampling circuit 5101 samples odd-bit data in the serial training data (DQ_RX), to obtain the odd-bit data (DQ_RX_ODD). The second sampling circuit 5102 samples even-bit data in the serial training data (DQ_RX), to obtain the even-bit data (DQ_RX_EVEN).

For example, in the conventional technology, to maintain direct current balance and avoid occurrence of consecutive "0"s or "1"s, 8b/10b encoding is performed on data at a TX end to encode 8-bit data into 10-bit data before the data is sent. Therefore, a group of 10-bit data includes only eight pieces of valid data, thereby reducing data transmission efficiency. In this embodiment of this application, the odd-bit data and the even-bit data are separately sampled. Even if there are a plurality of consecutive "0"s or "1"s in the serial training data, the consecutive "0"s or "1"s are separated after sampling, so that direct current balance is ensured.

For example, still with reference to FIG. 8A and FIG. 8B, the second die 60 may include a parallel-to-serial converter 61 (Parallel Serial Converter), and the parallel-to-serial converter 61 may convert a plurality of pieces of parallel training data (for example, D_TX[0], D_TX[1], ..., and D_TX[9]) into the serial training data (DQ_TX). When the serial training data is represented as 10'b00_0000_0001, an input of the parallel-to-serial converter 61 is D_TX[0]=1, D_TX[1]=0, ..., and D_TX[9]=0.

The second die 60 may further include a drive circuit 62 (Driver), where an input end o of the drive circuit 62 is coupled to an output end O of the parallel-to-serial converter 61, and an output end P of the drive circuit 62 is coupled to a serial interface. The drive circuit 62 is configured to drive the serial training data to the serial interface. The second die may further include a TX end controller 63, and the TX end controller 63 is coupled to a controller 59 of the first die 50 through a sideband control channel, and is configured to transmit a sideband control signal.

For example, the clock signal generated by the clock circuit 58 includes an odd-bit clock signal and an even-bit clock signal, and the odd-bit clock signal and the even-bit clock signal are a pair of differential signals. The first sampling circuit samples the DQ_RX based on a signal edge of the odd-bit clock signal, to obtain DQ_RX_ODD, and the first deserialization circuit deserializes the DQ_RX_ODD to obtain D_RX[1], D_RX[3], D_RX[5], D_RX[7], and D_RX[9]. The second sampling circuit samples the DQ_RX based on a signal edge of the even-bit clock signal, to obtain DQ_RX_EVEN, and the second deserialization circuit deserializes the DQ_RX_EVEN to obtain D_RX[0], D_RX[2], D_RX[4], D_RX[6], and D_RX[8].

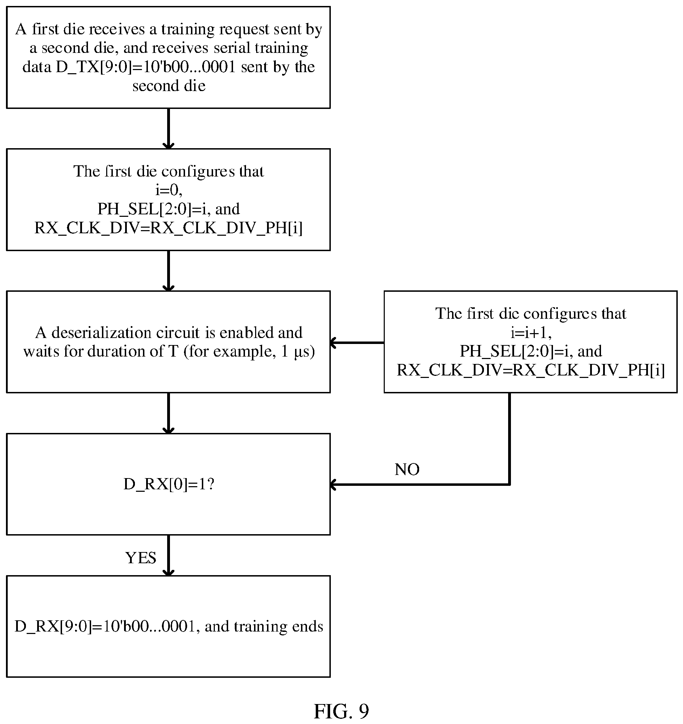

For example, step 701 to step 710 are a process of traversing a clock phase. As shown in FIG. 9, FIG. 9 is a flowchart of another clock phase traversal method according to an embodiment of this application. For training data of D_TX[9:0]=10'b00_0000_0001, the first die receives the training request sent by the second die, and receives the serial training data sent by the second die. The first die performs configuration, configures an initial signal of the accumulator circuit as i=0 and PH_SEL[2:0]=i, and configures an output RX_CLK_DIV= RX_CLK_DIV_PH[i] of the multiplexer. After the configuration ends, the deserialization circuit is enabled, and deserialization is performed after duration of T, where T may be 1 µs. If the least significant bit of the parallel training data obtained by deserializing the training data by the deserialization circuit based on the RX_CLK_DIV_PH[0] is the first level, that is, D_RX[0]=1, D_RX[9:0]=10'b00_0000_0001, and the training ends. If the least significant bit of the parallel training data obtained through deserialization by the deserialization circuit based on the RX_CLK_DIV_PH[0] is not the first level, the first die continues to perform configuration, configures an initial signal of the accumulator circuit as i=i+1 and PH_SEL[2:0]=i, and configures the output RX_CLK_DIV= RX_CLK_DIV_PH[i] of the multiplexer. The training ends until it is determined that D_RX[9:0]=10'b00_0000_0001.

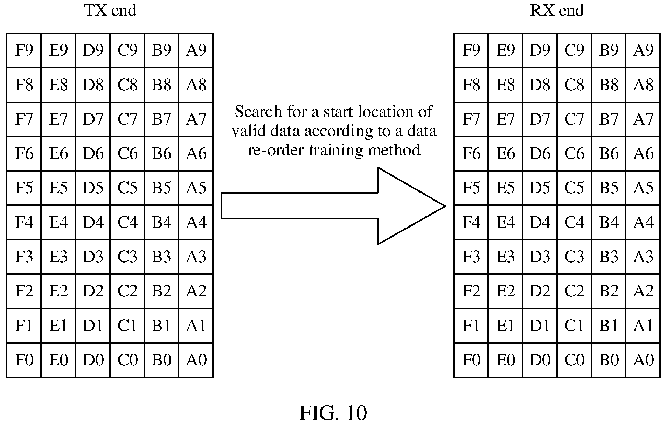

For example, a start location of valid data is searched for according to the data re-order training method provided in this embodiment of this application. As shown in FIG. 10, FIG. 10 is a diagram of a structure of searching for a start location based on a data re-order training method according to an embodiment of this application. A TX end includes six groups of data: A0 to A9, B0 to B9, C0 to C9, D0 to D9, E0 to E9, and F0 to F9. After training from the TX end to an RX end is completed according to the data re-order training method, data received by the RX end is A0 to A9, B0 to B9, C0 to C9, D0 to D9, E0 to E9, and F0 to F9, so that order-preserving receiving of the data is implemented.

Therefore, in this embodiment of this application, no special control character needs to be added to the data group, so that problems of long latency, high hardware overheads of power consumption and area, and low transmission efficiency caused by adding the special control character can be avoided. In this embodiment of this application, once the clock phase that can implement data order-preserving receiving is determined before data starts to be received, the TX end may directly send, to the RX end, data that does not carry a special control character. This can reduce latency of receiving data by the receive end, improve data transmission efficiency in the serial interface, and reduce hardware overheads of power consumption and area.

An embodiment of this application further provides a chip system. The chip system includes a first die and a second die. The first die and the second die transmit data through a serial interface. The second die is configured to send serial training data to the first die, where a least significant bit of the serial training data is a first level, another significant bit of the serial training data is a second level, and the first level and the second level are different levels; and the first die is configured to: select a first clock phase, and when a least significant bit of parallel training data obtained through deserialization is the first level, determine to use the first clock phase to deserialize serial service data sent by the second die.

This embodiment of this application may be further applied to a training process after initialization is performed between dies of a chiplet system. In the initialized training procedure, it is assumed that the first die is used as an RX end, the second die is used as a TX end. The TX end cooperates with the RX end, so that the RX end finds an appropriate sample window of data from the TX end, and the RX end receives the data from the TX end in the sample window.

In some embodiments, the TX end needs to first configure a TX in a training mode to obtain a data pattern. The TX end sends the data pattern to the RX end and sends a command to the RX end. The RX end receives the command, completes the training process based on the data pattern, and then sends an ACK signal to the TX end. The training process may include the data re-order training method provided in this application.

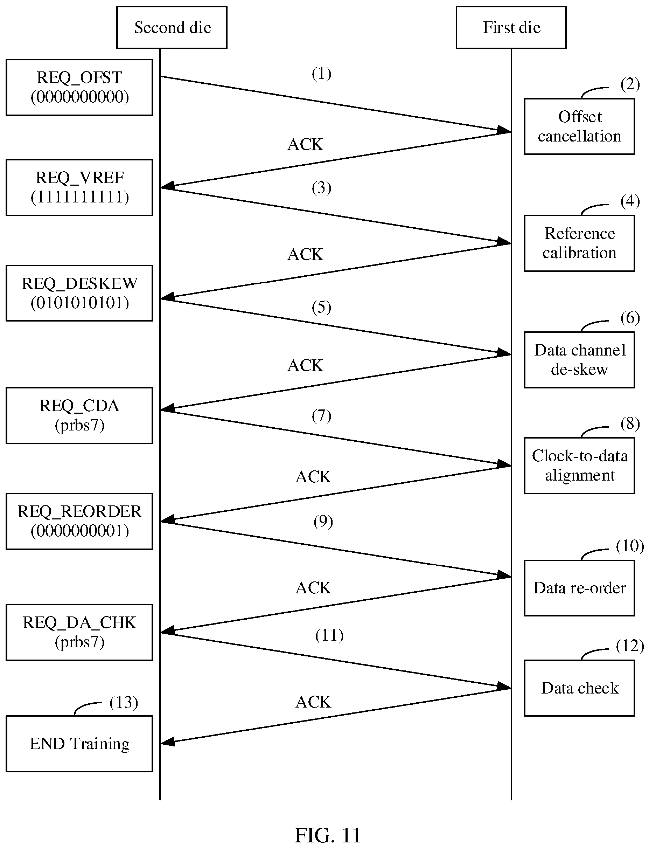

For example, as shown in FIG. 11, FIG. 11 is an NRZ mode-based training procedure according to an embodiment of this application. The NRZ mode may be understood as a mode in which problems such as a digital signal representation of digital data and a signal synchronization problem between a transmit end and a receive end are resolved during baseband transmission. For example, the RX end is the first die, and the TX end is the second die. The training procedure includes the following procedure.
(1) The second die sends an offset request (REQ_OFST) to the first die, where a data pattern (data pattern) in the REQ_OFST is "0000000000", and indicates the first die to perform offset cancellation (Offset Cancellation).
(2) The first die completes the offset cancellation based on the data pattern of the REQ_OFST, and returns an acknowledgment (Acknowledgment, ACK) character to the second die.
(3) The second die sends a reference request (REQ_VREF) to the first die, where a data pattern in the REQ_VREF is "1111111111", and indicates the first die to perform reference calibration (Vref Calibration);
(4) The first die completes the reference calibration based on the data pattern of the REQ_VREF, and returns an ACK to the second die.
(5) The second die sends a de-skew request (REQ_DESKEW) to the first die, where a data pattern in the REQ_DESKEW is "0101010101", and indicates the first die to perform data channel de-skew (Data Lane Deskew).
(6) The first die completes the data channel de-skew based on the data pattern of the REQ_DESKEW, and returns an ACK to the second die.
(7) The second die sends a clock-to-data alignment request (REQ_CDA) to the first die, where a data pattern in the REQ_CDA is "pseudo random binary sequence (Pseudo-Random Binary Sequence, prbs) 7", and indicates the first die to complete a clock-to-data alignment (Clock-to-Data Alignment) process, and this is equivalent to performing a data re-order training process in this application.
(8) The first die executes a clock-to-data alignment process based on the data pattern of "prbs7", and returns an ACK to the second die, where the data pattern of "prbs7" is, for example, a data pattern of serial training data in this application.
(9) The second die sends a data re-order request (REQ_REORDER) to the first die, where a data pattern in REQ_REORDER is "0000000001", and indicates the first die to perform data re-order (Reorder).
(10) The first die re-orders data based on the data pattern in the REQ_REORDER, and returns an ACK to the second die.
(11) The second die sends a data check request (REQ_DA _CHK) to the first die, where a data pattern in the REQ_DA _CHK is "prbs7", and indicates the first die to perform a data check (Data check).
(12) The first die performs data check based on the data pattern "prbs7", and returns an ACK to the second die.
(13) The training ends (END Training)

The data re-order training process provided in this application is used only for a training process in an NRZ mode, and may be further used for a training process in another mode. This is not limited in this application.

In embodiments, functional modules of the execution device may be obtained through division based on the foregoing method examples. For example, each functional module may be obtained through division in correspondence to each function, or two or more functions may be integrated into one processing module. The integrated module may be implemented in a form of hardware. It should be noted that module division in this embodiment is an example and is merely logical function division. In actual implementation, there may be another division manner.

Based on the foregoing descriptions of the implementations, a person skilled in the art may understand that for the purpose of convenient and brief description, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in another manner. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of this application. The foregoing storage medium includes any medium that can store program code such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A data re-order training method, applied to a chip system, wherein the chip system comprises a first die and a second die, the first die and the second die transmit data through a serial interface, and the method comprises:
receiving, by the first die, serial training data sent by the second die, wherein a least significant bit of the serial training data is a first level, another significant bit of the serial training data is a second level, and the first level and the second level are different levels; and
selecting, by the first die, a first clock phase, and when a least significant bit of parallel training data obtained through deserialization is the first level, determining to use the first clock phase to deserialize serial service data sent by the second die.

2. The method according to claim 1, wherein before the receiving, by the first die, serial training data sent by the second die, the method comprises:
receiving, by the first die, a training request sent by the second die, wherein the training request is used to request to send the serial training data.

3. The method according to claim 1 or 2, wherein the first level is a high level, and the second level is a low level.

4. The method according to any one of claims 1 to 3, wherein the first die comprises a multi-clock generation circuit, a multiplexer, a deserialization circuit, a comparator circuit, and an accumulator circuit; and
a plurality of input ends of the multiplexer are coupled to a plurality of output ends of the multi-clock generation circuit, an output end of the multiplexer is coupled to an input end of the deserialization circuit, an output end of a least significant bit of parallel data of the deserialization circuit is coupled to a first input end of the comparator circuit, a third level is input at a second input end of the comparator circuit, an output end of the comparator circuit is coupled to an input end of the accumulator circuit, and an output end of the accumulator circuit is coupled to a control signal input end of the multiplexer.

5. The method according to claim 4, wherein when the first level is a high level and the second level is a low level, the third level is a low level; or when the first level is a low level and the second level is a high level, the third level is a high level.

6. The method according to claim 5, wherein when the first level is a high level and the second level is a low level, the selecting, by the first die, a first clock phase, and when a least significant bit of parallel training data obtained through deserialization is the first level, determining to use the first clock phase to deserialize serial service data sent by the second die comprises:
sending, by the accumulator circuit, a first control signal to the multiplexer, to control the multiplexer to select the first clock phase and output the first clock phase to the deserialization circuit;
comparing, by the comparator circuit, the least significant bit of the parallel training data obtained through deserialization with a low level that is input at the second input end of the comparator circuit, and outputting a first comparison result; and
when the first comparison result is a low level, selecting, by the multiplexer, to use the first clock phase to deserialize the serial service data sent by the second die.

7. The method according to claim 6, wherein the method further comprises:
when the first comparison result is a high level, sending, by the accumulator circuit, a second control signal to the multiplexer, to control the multiplexer to select a second clock phase and output the second clock phase to the deserialization circuit;
comparing, by the comparator circuit, the least significant bit of the parallel training data obtained through deserialization with the low level that is input at the second input end of the comparator circuit, and outputting a second comparison result; and
when the second comparison result is a low level, selecting, by the multiplexer, to use the second clock phase to deserialize the serial service data sent by the second die.

8. The method according to any one of claims 1 to 7, wherein the first die further comprises a first sampling circuit and a second sampling circuit, and the deserialization circuit comprises a first deserialization circuit and a second deserialization circuit; and
an output end of the first sampling circuit is coupled to an input end of the first deserialization circuit, and an output end of the second sampling circuit is coupled to an input end of the second deserialization circuit; the first sampling circuit samples odd-bit data in the serial training data, and outputs the odd-bit data to the first deserialization circuit; and the second sampling circuit samples even-bit data in the serial training data, and outputs the even-bit data to the second deserialization circuit.

9. A first die, wherein the first die is used in a chip system, the chip system comprises the first die and a second die, the first die and the second die transmit data through a serial interface, and the first die comprises:
a receiver, configured to receive serial training data sent by the second die, wherein a least significant bit of the serial training data is a first level, another significant bit of the serial training data is a second level, and the first level and the second level are different levels; and
a selection circuit, configured to: select a first clock phase, and when a least significant bit of parallel training data obtained through deserialization is the first level, determine to use the first clock phase to deserialize serial service data sent by the second die.

10. The first die according to claim 9, wherein the receiver is further configured to receive a training request sent by the second die, wherein the training request is used to request to send the serial training data.

11. The first die according to claim 9 or 10, wherein the first level is a high level, and the second level is a low level.

12. The first die according to any one of claims 9 to 11, wherein the selection circuit comprises a multiplexer, and the first die further comprises a multi-clock generation circuit, a deserialization circuit, a comparator circuit, and an accumulator circuit; and
a plurality of input ends of the multiplexer are coupled to a plurality of output ends of the multi-clock generation circuit, an output end of the multiplexer is coupled to an input end of the deserialization circuit, an output end of a least significant bit of parallel data of the deserialization circuit is coupled to a first input end of the comparator circuit, a third level is input at a second input end of the comparator circuit, an output end of the comparator circuit is coupled to an input end of the accumulator circuit, and an output end of the accumulator circuit is coupled to a control signal input end of the multiplexer.

13. The first die according to claim 12, wherein when the first level is a high level and the second level is a low level, the third level is a low level; or when the first level is a low level and the second level is a high level, the third level is a high level.

14. The first die according to claim 13, wherein the first die further comprises a controller, and an input end of the controller is coupled to the output end of the comparator circuit;
when the first level is a high level and the second level is a low level, the accumulator circuit is configured to send a first control signal to the multiplexer;
the multiplexer is configured to: select the first clock phase and output the first clock phase to the deserialization circuit;
the comparator circuit is configured to: compare the least significant bit of the parallel training data obtained through deserialization with a low level that is input at the second input end of the comparator circuit, and output a first comparison result; and when the first comparison result is a low level, output the first comparison result to the controller;
the controller is configured to indicate, to the second die, that training is completed; and
the multiplexer is configured to select to use the first clock phase to deserialize the serial service data sent by the second die.

15. The first die according to claim 14, wherein
when the first comparison result is a high level, the accumulator circuit is configured to send a second control signal to the multiplexer;
the multiplexer is configured to: select the second clock phase, and output the second clock phase to the deserialization circuit;
the comparator circuit is configured to: compare the least significant bit of the parallel training data obtained through deserialization with the low level that is input at the second input end of the comparator circuit, and output a second comparison result; and when the second comparison result is a low level, output the second comparison result to the controller;
the controller is configured to indicate, to the second die, that training is completed;
the multiplexer is configured to select to use the second clock phase to deserialize the serial service data sent by the second die.

16. The first die according to any one of claims 9 to 15, wherein the receiver comprises a sampling circuit, the sampling circuit comprises a first sampling circuit and a second sampling circuit, and the deserialization circuit comprises a first deserialization circuit and a second deserialization circuit;
an output end of the first sampling circuit is coupled to an input end of the first deserialization circuit, and an output end of the second sampling circuit is coupled to an input end of the second deserialization circuit;
the first sampling circuit is configured to: sample odd-bit data in the serial training data, and output the odd-bit data to the first deserialization circuit; and
the second sampling circuit is configured to: sample even-bit data in the serial training data, and output the even-bit data to the second deserialization circuit.

17. A data re-order transmission training method, applied to a chip system, wherein the chip system comprises the first die and the second die according to any one of claims 1 to 8, the first die and the second die transmit data through a serial interface, and the method comprises:
sending, by the second die, serial training data to the first die, wherein a least significant bit of the serial training data is a first level, another significant bit of the serial training data is a second level, and the first level and the second level are different levels; and
selecting, by the first die, a first clock phase, and when a least significant bit of parallel training data obtained through deserialization is the first level, determining to use the first clock phase to deserialize serial service data sent by the second die.

18. A chip system, wherein the chip system comprises the first die and the second die according to any one of claims 9 to 16, and the first die and the second die transmit data through a serial interface, wherein
the second die is configured to send serial training data to the first die, wherein a least significant bit of the serial training data is a first level, another significant bit of the serial training data is a second level, and the first level and the second level are different levels; and
the first die is configured to: select a first clock phase, and when a least significant bit of parallel training data obtained through deserialization is the first level, determine to use the first clock phase to deserialize serial service data sent by the second die.
